# DEMANDE DE BREVET EUROPEEN

(11) **EP 0 969 533 A1**
(43) Date de publication de la demande: **05.01.2000**
(21) Numéro de dépôt: 99401449.6
(22) Date de dépôt: 14.06.1999
(51) Int. Cl.: H01M 2/02, H01M 2/10

(54) **Dispositif de maintien pour batterie monobloc**

(30) Priorité: 29.06.1998 FR 9808205
(71) Demandeur: ALCATEL, 75008 Paris (FR)
(72) Inventeur: Gilabert, Claude, Lovens, 33290 Le Pian Medoc (FR); Leturque, Michel, 33290 Blanquefort (FR); Verhoog, Roelof, 33200 Bordeaux (FR)
(74) Mandataire: Laroche, Danièle

(57) **Abrégé**

Un dispositif de maintien pour une batterie monobloc possédant un conteneur prismatique ayant deux parois longitudinales et deux parois transversales, ledit dispositif comportant deux plaques (20) respectivement appliquées contre chacune desdites parois transversales et au moins un moyen de serrage desdites plaques consistant en au moins un ruban (22) plat fermé sur lui-même entourant lesdites parois longitudinales et lesdites parois transversales munies desdites plaques, caractérisé en ce qu'une au moins desdites plaques comporte au moins un logement (21) en creux et en ce que ledit ruban épouse la forme dudit logement.

## Description

La présente invention concerne un dispositif de maintien pour une batterie monobloc. Ces batteries sont utilisées en particulier pour l'alimentation des véhicules électriques. Une batterie monobloc Nickel-Cadmium ou Nickel-Métal Hydrurable possède une capacité comprise entre 5Ah et 250Ah.

Dans une batterie de conception monobloc, les faisceaux électrochimiques sont contenus dans les alvéoles d'un conteneur unique. Le conteneur est habituellement en matière plastique de forme prismatique. Chaque faisceau électrochimique est constitué par l'assemblage alternatif d'électrodes planes positives et négatives séparées les unes des autres par un séparateur, puis imprégné d'un électrolyte. Le faisceau électrochimique présente deux petites faces correspondant aux tranches des électrodes empilées et deux grandes faces parallèles à la surface des électrodes. Aux petites faces du faisceau correspondent les parois longitudinales de la batterie et aux grandes faces du faisceau correspondent les parois transversales.

Au cours du cyclage, les électrodes subissent des variations dimensionnelles qui exercent une poussée sur les parois du conteneur de la batterie placées en vis-à-vis des grandes faces du faisceau. En outre la pression gazeuse interne appuie sur l'ensemble des parois du conteneur. Afin de prévenir l'expansion et la déformation de la batterie, il est nécessaire de prévoir un dispositif qui maintienne les parois.

Le brevet US-4,020,244 montre une batterie composée de plusieurs accumulateurs étanches parallélépipèdiques, notamment du type Nickel-Cadmium, munie d'un dispositif destiné à empêcher la déformation de la batterie. Le système de fixation comprend une paire de plaques de compression disposées aux extrémités de l'empilement de générateurs et plusieurs bandes passant autour de l'empilement et des plaques. Les bandes sont étroitement serrées et leurs extrémités sont soudées l'une sur l'autre .

Le dégagement de chaleur inévitable provoqué par la soudure nécessite la présence de dissipateurs. Lorsque la soudure est effectuée aux extrémités de la batterie, les plaques peuvent avoir une masse suffisante pour jouer ce rôle ; mais si la soudure est réalisée sur l'un des cotés, des dissipateurs doivent être ajoutés de manière à protéger les générateurs.

Le brevet FR-1 267 153 décrit une batterie de plusieurs accumulateurs. Les faisceaux sont contenus dans des bacs qui sont juxtaposés et réunis par des ceintures associées à des plaques. Ce dispositif d'assemblage comprime les faisceaux électrochimiques perpendiculairement à leur plan. Les ceintures sont refermées sur elles-mêmes par des tendeurs afin de pouvoir relâcher la ceinture s'il devient nécessaire de sortir ou d'introduire un bac.

Dans le cas d'une batterie monobloc, le problème du remplacement d'un bac ne se pose pas. La présence d'un tenseur augmente inutilement l'encombrement et le coût de la batterie.

La présente invention a pour but de proposer un dispositif pour le maintien d'une batterie monobloc dont l'encombrement soit moindre et la réalisation plus aisée et moins coûteuse que pour les dispositifs connus.

L'objet de la présente invention est un dispositif de maintien pour une batterie monobloc possédant un conteneur prismatique ayant deux parois longitudinales et deux parois transversales. Le dispositif comporte deux plaques respectivement appliquées contre chacune desdites parois transversales et au moins un moyen de serrage desdites plaques consistant en au moins un ruban plat fermé sur lui-même entourant lesdites parois longitudinales et lesdites parois transversales munies desdites plaques.

Le dispositif selon l'invention est caractérisé en ce qu'une au moins desdites plaques comporte au moins un logement en creux et en ce que une portion de la longueur dudit ruban pénètre dans ledit logement afin de mettre ledit ruban sous tension.

La déformation du ruban, qui est nécessaire pour le faire entrer dans le logement, utilise une partie de la longueur du ruban. Celui-ci se trouve ainsi étroitement plaqué sur les plaques d'extrémités et les parois longitudinales du conteneur. La force de serrage appliqué par le ruban après déformation dépend de la longueur du ruban et de la partie de cette longueur utilisée pour la déformation.

Afin de prendre et de conserver la forme qui lui a été conféré, le ruban doit être semi-rigide. De préférence ledit ruban est découpé dans un feuillard métallique.

L'épaisseur et la largeur du ruban dépendent de la poussée à contenir. Selon une première forme d'exécution, ledit ruban est en acier, protégé contre la corrosion par exemple par un revêtement de nickel ou d'un autre métal, et a une épaisseur supérieure à 0,2mm.

Selon le mode préféré de réalisation de l'invention, ledit moyen de serrage comprend deux rubans en acier inoxydable de 1mm d'épaisseur et de 22mm de largeur, soit 44mm² de section.

Selon un deuxième mode de réalisation de l'invention, ledit moyen de serrage comprend deux rubans en acier de 0,3mm d'épaisseur et de 132mm de largeur, soit 40mm² de section.

Selon une deuxième forme d'exécution, ledit ruban est en acier inoxydable et a une épaisseur au moins égale à 0,6mm et de préférence comprise entre 0,8mm et 1,2mm, lorsque la grande face du faisceau a une surface de l'ordre de 1,5dm². Dans le même cas un ruban en aluminium aura une épaisseur supérieure à celle d'un ruban en acier inoxydable.

Avantageusement ledit logement a une profondeur du même ordre que l'épaisseur dudit ruban. Dans ce cas la déformation du feuillard est pratiquement irréversible.

De préférence ledit logement est ménagé sur la tranche de ladite plaque située dans le prolongement de ladite paroi longitudinale. La plaque est alors utilisée comme matrice pour l'outil d'emboutissage.

Avantageusement lesdites parois longitudinales portent des rainures de la largeur et de l'épaisseur dudit ruban sur toute leur longueur. Les rainures servent de guide au ruban et absorbe la surépaisseur qui résulte de sa présence. Les batteries peuvent ainsi être accolées sans perte de place.

Avantageusement aussi lesdites plaques portent des rainures de la largeur et de l'épaisseur dudit ruban sur leur face externe. Les batteries peuvent ainsi être également juxtaposées sans perte d'espace par leurs parois transversales.

Les plaques sont placées contre les parois transversales de la batterie de telle manière qu'elles soient bloquées en translation dans un plan parallèle aux électrodes. Par exemple on peut ménager des logements dans la paroi transversale dans lesquels viennent se placer les plaques.

Avantageusement ladite paroi transversale a une forme concave et la face de ladite plaque tournée vers ledit conteneur épouse la forme de ladite paroi transversale. Cette forme permet à la paroi transversale de résister à la poussée des électrodes dont l'épaisseur varie au cours du cyclage.

L'invention a aussi pour objet le procédé de réalisation du dispositif de maintien comprenant les étapes suivantes.

D'une part on applique une des plaques respectivement sur chacune des parois transversales.

D'autre part on découpe un ruban plat et on ferme ledit ruban sur lui-même, de telle sorte que la longueur du ruban fermé soit légèrement supérieure au périmètre du conteneur encadré des plaques. Ainsi on possède un jeu suffisant pour mettre en place le ruban.

On dispose alors ledit ruban fermé autour des parois longitudinales et des plaques, sur la périphérie extérieure de la batterie.

Enfin on exerce une poussée sur le ruban afin de le faire pénétrer dans ledit logement, ce qui entraîne un rétrécissement du ruban et le serrage des plaques contre le conteneur de la batterie. A l'aide d'un outillage approprié on exerce un effort limité sur le ruban sans lui imposer de déformation. Quand l'effort de poussée de l'outillage sur le ruban est atteint, l'effort s'arrête et le ruban est tendu. Si la longueur du ruban en excès est suffisante, il épousera la forme du logement.

De préférence on déforme ledit ruban par compression, notamment à l'aide d'un outil d'emboutissage.

L'invention sera mieux comprise et d'autres avantages et particularités apparaîtront à la lecture de la description qui va suivre, donnée à titre non limitatif, accompagnée des dessins annexés parmi lesquels:
- la figure 1 est une vue en perspective d'une batterie monobloc comportant un dispositif de maintien selon la présente invention,
- la figure 2 est une vue partielle de dessous de la batterie montrant un mode de réalisation du dispositif selon la présente invention,
- les figures 3 et 4 sont un agrandissement de la zone IV montrant le procédé de réalisation de la variante de la figure 3, la figure 3 représente la ceinture avant emboutissage et la figure 4, analogue à la figure 3, représente la ceinture après emboutissage,
- la figure 5 est une vue en perspective d'une batterie monobloc montrant un perfectionnement à la présente invention,
- la figure 6 est une vue en perspective d'une batterie monobloc montrant un autre perfectionnement à la présente invention.

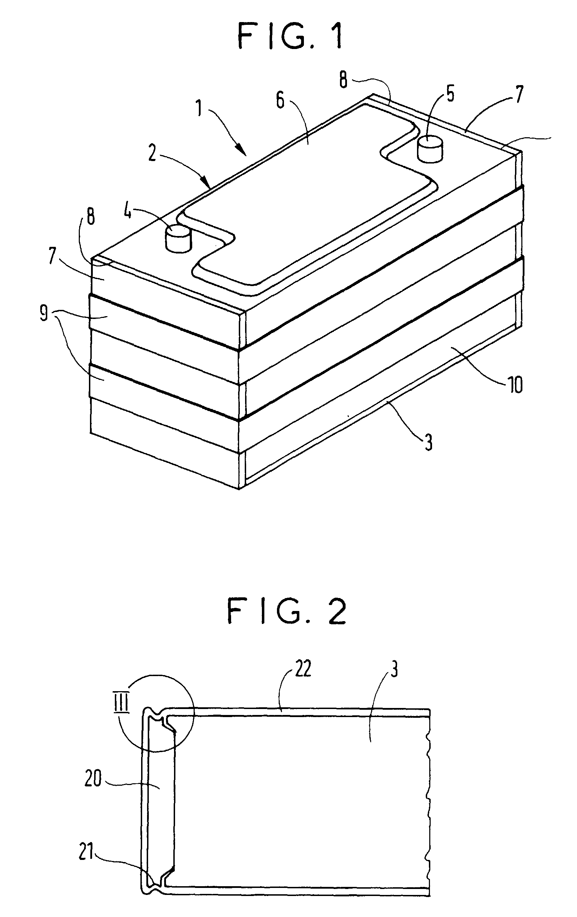

Selon la présente invention, on a représenté sur la figure 1 une batterie monobloc 1 Nickel-Métal Hydrurable (Ni-MH) de capacité environ 100Ah. La batterie possède un conteneur 2 en polymère thermoplastique de forme prismatique et un moyen de fermeture du conteneur constituant un fond 3. Le conteneur 2 porte à sa partie supérieure une borne positive 4 et une borne négative 5 pour le raccordement électrique de la batterie à une connexion externe, un capot 6 protégeant notamment les liaisons électriques entre les faisceaux électrochimiques.

A chaque extrémité du conteneur sont disposées des plaques 7 au contact des parois transversales 8 du conteneur. Les plaques 7 sont maintenues en place par deux ceintures métalliques planes 9 consistant en deux rubans en acier nickelé de 0,3mm d'épaisseur et de 132mm de largeur. Les ceintures 9 sont appliquées le long des parois longitudinales 10 et passant sur les plaques 7.

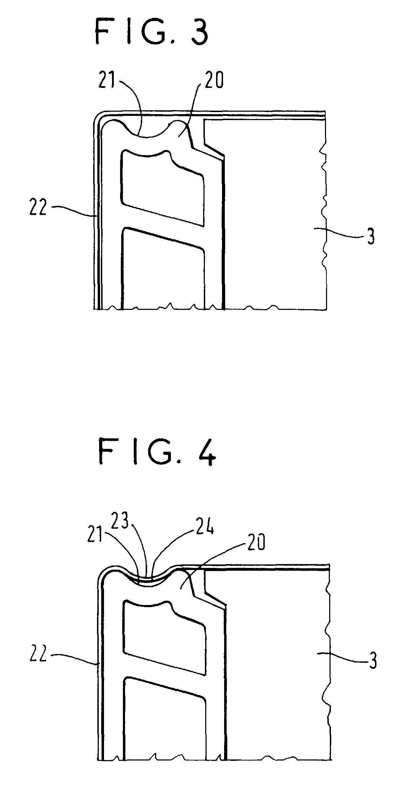

Comme le montre la figure 2, la tranche de la plaque 20 porte un logement 21 formant un creux. Un ruban métallique est découpé et refermé sur lui-même par soudure de ses extrémités pour former une ceinture 22 en conservant une longueur légèrement supérieure au périmètre du conteneur muni des plaques 20 afin de ménager un jeu suffisant pour la mise en place de la ceinture. Puis la ceinture 22 est placée autour de la batterie monobloc munie des plaques 20. On exerce alors sur la ceinture 22 une force dans la direction de la flèche indiquée sur la figure 3 afin de provoque sa déformation 23. La partie déformée 24 de la ceinture 22 épouse la forme du logement 21 comme le montre la figure 4, provoquant ainsi un resserrement de la ceinture 22 sur les parois longitudinales 10 du conteneur 2 et sur les plaques 20. La ceinture 22 est sous tension et maintien ensemble le conteneur 2 et les plaques 20. Il n'est pas prévu de jeu entre le faisceau électrochimique et les parois transversales 8 du conteneur 2 ; ainsi la poussée exercée par le gonflement du faisceau est intégralement reprise par les plaques 20 et non pas par le conteneur 2 qui risquerait de se rompre.

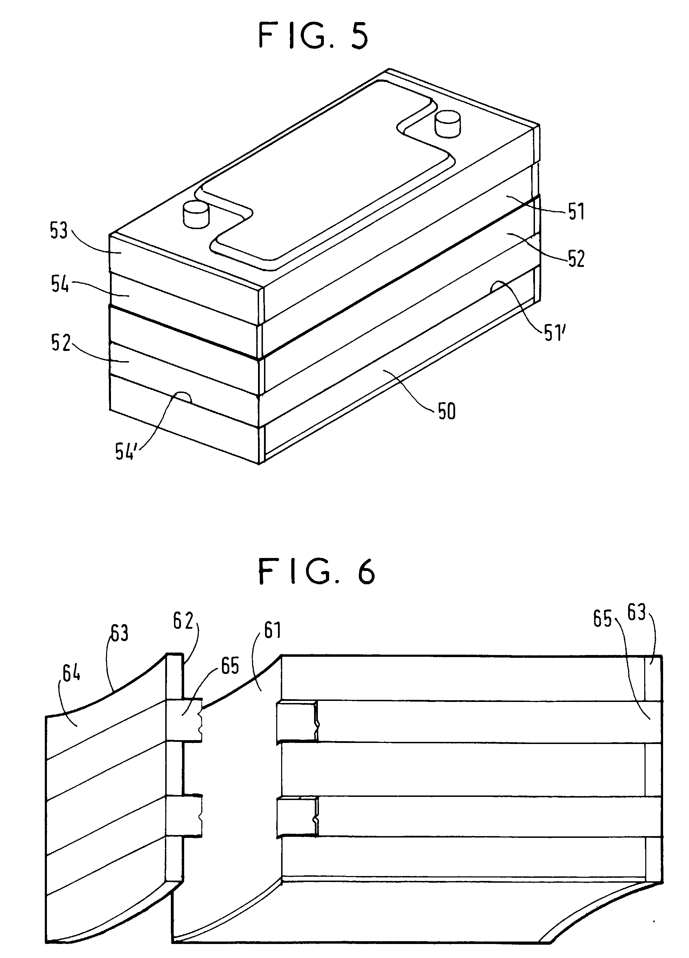

La figure 5 représente une variante de réalisation de l'invention selon laquelle la batterie monobloc porte deux rainures 51, 51' sur toute la longueur de la paroi longitudinale 50. On a représenté la rainure supérieure 51 et une ceinture 52 en acier nickelé de 1 mm d'épaisseur et de 22mm de largeur passant dans la rainure inférieure 51'. La rainure 51' a environ la largeur de la ceinture 52 et sa profondeur est du même ordre que l'épaisseur de la ceinture 52. De préférence encore la rainure 51, 51' se prolonge sur la plaque 53 par une rainure 54, 54' sensiblement de mêmes dimensions. Grâce à cette rainure qui accueillent la ceinture, le dispositif de maintien n'augmente pas l'encombrement de la batterie.

Selon une autre variante de réalisation de l'invention illustrée par la figure 6, la poussée des électrodes sur les parois transversales 61 du conteneur peut être compensée en donnant à ces parois 61 une forme concave. Ainsi sous la poussée des électrodes, la paroi transversale 61 tendra vers une forme plane. La face 62 des plaques 63 appliquée contre la paroi transversale 61 présente un profil convexe épousant la concavité de la paroi 61. Avantageusement on donne à la face opposée 64 un profil parallèle à celui de la face 62.

## Revendications

1. Dispositif de maintien pour une batterie monobloc possédant un conteneur prismatique ayant deux parois longitudinales et deux parois transversales, ledit dispositif comportant deux plaques respectivement appliquées contre chacune desdites parois transversales et au moins un moyen de serrage desdites plaques consistant en au moins un ruban plat fermé sur lui-même entourant lesdites parois longitudinales et lesdites parois transversales munies desdites plaques, caractérisé en ce qu'une au moins desdites plaques comporte au moins un logement en creux et en ce que une portion de la longueur dudit ruban pénètre dans ledit logement afin de mettre ledit ruban sous tension.

2. Dispositif selon la revendication 1, dans lequel ledit ruban est métallique.

3. Dispositif selon l'une des revendications 1 et 2, dans lequel ledit ruban est en acier et a une épaisseur supérieure à 0,2mm.

4. Dispositif selon l'une des revendications précédentes, dans lequel ledit moyen de serrage comprend deux rubans en acier de 1 mm d'épaisseur et de 22mm de largeur.

5. Dispositif selon l'une des revendications précédentes, dans lequel ledit moyen de serrage comprend deux rubans en acier de 0,3mm d'épaisseur et de 132mm de largeur.

6. Dispositif selon l'une des revendications 1 et 2, dans lequel ledit ruban est en acier inoxydable et a une épaisseur au moins égale à 0,6mm.

7. Dispositif selon l'une des revendications précédentes, dans lequel ledit logement a une profondeur du même ordre que l'épaisseur dudit ruban.

8. Dispositif selon l'une des revendications précédentes, dans lequel ledit logement est ménagé sur la tranche de ladite plaque située dans le prolongement de ladite paroi longitudinale.

9. Dispositif selon l'une des revendications précédentes, dans lequel lesdites parois longitudinales portent des rainures de la largeur et de l'épaisseur dudit ruban sur toute leur longueur.

10. Dispositif selon l'une des revendications précédentes, dans lequel lesdites plaques portent des rainures de la largeur et de l'épaisseur dudit ruban sur leur face externe.

11. Dispositif selon l'une des revendications précédentes, dans lequel ladite paroi transversale a une forme concave et la face de ladite plaque tournée vers ledit conteneur épouse la forme de ladite paroi transversale.

12. Procédé de réalisation d'un dispositif de maintien selon l'une des revendications 1 à 11, comprenant les étapes suivantes:
- on applique une desdites plaques respectivement sur chacune desdites parois transversales,
- on découpe un ruban plat et on ferme ledit ruban sur lui-même,
- on dispose ledit ruban fermé autour desdites parois longitudinales et desdites plaques,
- on déforme ledit ruban afin le faire pénétrer dans ledit logement.

13. Procédé de réalisation d'un dispositif de maintien selon la revendication 8, dans lequel on déforme ledit ruban par compression.
